# EUROPÄISCHE PATENTSCHRIFT

(11) **EP 0 733 541 B1**
(45) Veröffentlichungstag und Bekanntmachung des Hinweises auf die Patenterteilung: **08.10.1997**
(21) Anmeldenummer: 95104192.0
(22) Anmeldetag: 22.03.1995
(51) Int. Cl.: B62D 27/02

(54) **Wagenkasten für Kraftfahrzeuge, insbesondere Personenkraftwagen**
Frame for motor vehicles, especially for passenger cars
Carosserie pour véhicules à moteur, en particulier pour voitures automobiles

(43) Veröffentlichungstag der Anmeldung: 25.09.1996
(73) Patentinhaber: Dr.Ing.h.c. F. Porsche Aktiengesellschaft, 70435 Stuttgart (DE); REGIE NATIONALE DES USINES RENAULT S.A., 92109 Boulogne Billancourt Cédex (FR)
(72) Erfinder: Hoffmann, Mario, D-71287 Weissach (DE); Vlahovic, Josip, D-74321 Bietigheim-Bissingen (DE); Winter, Fred, D-71277 Rutesheim (DE)

(56) Entgegenhaltungen:
- EP-A- 0 610 783
- EP-B- 0 146 716
- DE-A- 4 330 559

## Beschreibung

Die Erfindung bezieht sich auf einen Wagenkasten für Kraftfahrzeuge, insbesondere Personenkraftwagen, mit einer aus Hohlprofilen zusammengesetzten Trägerstruktur gemäß dem Oberbegriff des Patentanspruchs 1.

Bei einem bekannten Wagenkasten der eingangs genannten Gattung (EP 0 146 716 B 1) umschließen die Knotenelemente eingelegte Endbereiche der durch Strangpreßprofile gebildeten Hohlprofile, wobei durch eine zusätzliche Klebe- oder Schweißverbindung zwischen den Hohlprofilen und dem Knotenelement ein relativ dichter Verbund zwischen den Knotenelementen und den Hohlprofilen geschaffen wird.

Damit bei einer Oberflächenbehandlung der Trägerstruktur auch die inneren Hohlräume der Hohlprofile erfaßt werden, ist es erforderlich, an den Hohlprofilen örtlich Öffnungen vorzusehen, durch die Wasser, Lack oder dgl. zu- bzw. abgeführt werden kann. Nach Beendigung der Oberflächenbehandlung werden diese Öffnungen mit Stopfen oder dgl. verschlossen. Die nachträgliche Anbringung von Öffnungen und Stopfen an den Hohlprofilen stellt einen beträchtlichen Aufwand dar.

Die EP 0 610 783 A1 offenbart einen Wagenkasten für Kraftfahrzeuge mit einer aus rohrförmigen Hohlprofilen zusammengesetzten Trägerstruktur, wobei ein Hohlprofil im gemeinsamen Verbindungsbereich so aufgeweitet ist, daß das andere Hohlprofil abschnittsweise in den aufgeweiteten Endbereich formschlüssig einsteckbar ist. Benachbart vom gemeinsamen Verbindungsbereich sind an beiden Hohlprofilen entlang deren Längserstreckung beabstandet angeordnete Schlitzöffnungen ausgebildet, durch die Lack, Wasser oder dergleichen zu- bzw. abgeführt werden kann. Durch die Zu- und Abläufe entlang der Hohlprofile werden diese bereichsweise geschwächt.

Aufgabe der Erfindung ist es, einen aus Knotenelementen und Hohlprofilen hergestellten Wagenkasten der eingangs genannten Art derart herzustellen, daß die genannten Nachteile vermieden werden.

Erfindungsgemäß wird diese Aufgabe durch die kennzeichnenden Merkmale von Patentanspruch 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß die Zu- und Abläufe für die Oberflächenbehandlung der Hohlräume der Hohlprofile in die Knotenelemente integriert sind, so daß keine Öffnungen hierfür in den Strangpreßprofilen vorgesehen werden müssen. Dadurch entfallen kostenintensive und zeitaufwendige Arbeitsschritte, wie das Anbringen der Öffnungen in den Strangpreßprofilen, sowie das spätere Verschließen mit Stopfen.

Ein weiterer Vorteil ist darin zu sehen, daß die Aufnahmen für die Strangpreßprofile im Knotenelement derart ausgebildet sind, daß Toleranzen der Bauteile leicht ausgleichbar sind.

Ausführungsbeispiele der Erfindung sind in den Zeichnungen dargestellt und werden im folgenden näher beschrieben.

Es zeigt
Fig.1 einen Verbindungsbereich eines Hohlprofils mit einem Knotenelement einer Tragstruktur eines Wagenkastens, und
Fig.2 eine weitere Ausführung eines Verbindungsbereiches ohne Toleranzausgleich.

Ein nicht näher dargestellter Wagenkasten für Kraftfahrzeuge, insbesondere Personenkraftwagen, umfaßt eine aus Hohlprofilen 2 und Knotenelementen 1 zusammengesetzte Trägerstruktur 3.

In einem gemeinsamen Verbindungsbereich 4 von zumindest zwei Hohlprofilen 2 ist jeweils ein Knotenelement 1 vorgesehen, wobei am Knotenelement 1 Aufnahmen 5 vorgesehen sind, in die Endbereiche 6 der an das Knotenelement angeschlossenen Hohlprofile 2 eingesetzt sind.

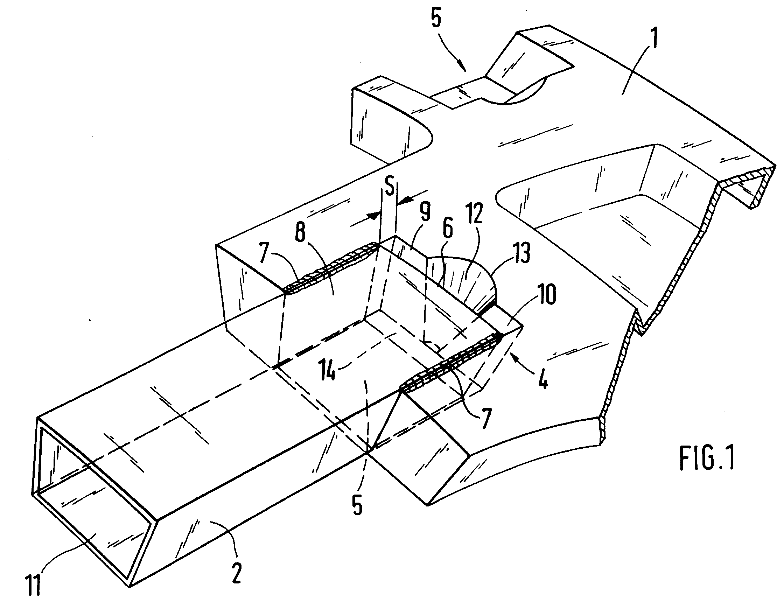

Gemäß Fig. 1 wird als Hohlprofil 2 durch ein Strangpreßprofil aus einer Leichtmetall-Legierung gebildet und weist im Ausführungsbeispiel eine etwa trapezförmige Querschnittsform auf.
Das Knotenelement 1 wird durch ein Gußteil oder durch ein im Innenhochdruck-Umformverfahren hergestelltes Teil gebildet.

Die Aufnahme 5 am Knotenelement 1 ist im Querschnitt gesehen der Form des Hohlprofils 2 angepaßt, so daß eine formschlüssige Verbindung zwischen dem Hohlprofil 2 und dem Knotenelement 1 bei zusammengefügter Trägerstruktur 3 gegeben ist.

Das Hohlprofil 2 ist örtlich über zusätzliche Schweiß- oder Klebeverbindungen 7 mit der Aufnahme 5 des Knotenelements 1 verbunden.

Entsprechend Fig. 1 ist die Aufnahme 5 in Richtung des einzuführenden Hohlprofils 2 und nach oben hin offen ausgebildet. Die obere Fläche 8 des Hohlprofils 1 verläuft annähernd außenhautbündig zur angrenzenden Kontur des Knotenelements 1.

Zur Kompensation von Toleranzen des Hohlprofils 2 in Längsrichtung ist im Bereich der Aufnahme 5 ein Ausgleichsraum 9 vorgesehen.

Das Hohlprofil 2 kann entweder an einer stirnseitigen Begrenzungswand 10 der Aufnahme 5 anliegen oder gemäß der Fig. 1 mit Abstand "S" zur Begrenzungswand 10 verlaufen.

Damit auch die inneren Hohlräume 11 der Hohlprofile 2 bei der Oberflächenbehandlung (Phosphatieren, Tauchlackieren usw.) der Trägerstruktur miterfaßt werden, ist erfindungsgemäß vorgesehen, daß an den Knotenelementen 1 Zu- und Abläufe 12 für die inneren Hohlräume 11 der angeschlossenen Hohlprofile 2 vorgesehen sind.

Jeder Zu- und Ablauf 12 wird durch eine örtliche rinnenförmige Ausbuchtung 13 der Aufnahme 5 des Knotenelements 1 gebildet. Die Ausbuchtung 13 ist an der stirnseitigen Begrenzungswand 10 der Aufnahme 5 vorgesehen, wobei eine offene Seite der Ausbuchtung 13 dem Endbereich 6 des in die Aufnahme 5 eingesetzten Hohlprofils 2 zugekehrt ist.

Die Ausbuchtung 13 ist etwa in einem mittleren Bereich der Quererstreckung des Hohlprofils 2 vorgesehen und verläuft entlang der Höhenerstreckung des Hohlprofils 2. Im Ausführungsbeispiel ist die Ausbuchtung 13 nach oben hin offen ausgebildet. Die Ausbuchtung 13 kann jedoch auch eine geringere Höhenerstreckung aufweisen, d.h. sie braucht sich nicht unbedingt bis zum Bodenbereich 14 der Aufnahme 5 erstrecken.

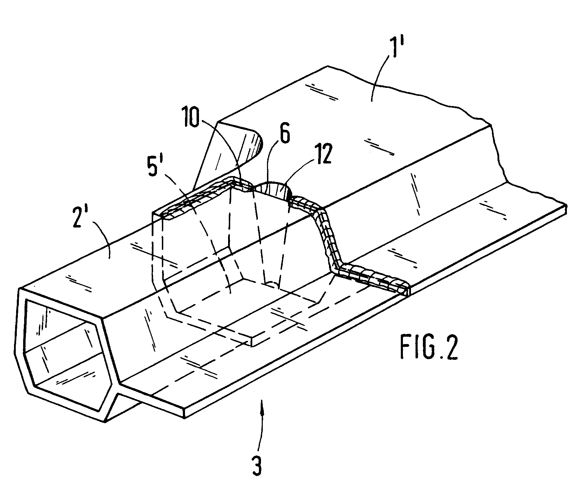

Entsprechend den Figuren 1 und 2 ist die Ausbuchtung 13 halbkraterförmig ausgebildet, d.h. sie erweitert sich vom Bodenbereich 14 nach oben hin kontinuierlich.

Die Ausbuchtung 13 kann - in der Draufsicht gesehen - jedoch auch U-förmig, halbkreisförmig oder dgl. ausgebildet sein.

Nachdem ein Toleranzausgleich an beiden Enden eines Strangpreßprofils nicht erforderlich ist, kann einem Verbindungsknoten mit Toleranzausgleich einer ohne Toleranzausgleich gegenüberliegen. Eine entsprechende Ausführung zeigt Fig. 2, bei der der Endbereich 6 des Strangpreßprofils 2'' an der stirnseitigen Begrenzungswand 10 der Aufnahme 5' anliegt. Die Zu- und Abläufe 12 sind analog der Ausführung der Figur 1.

### Bezugszeichen in Fig. 1 und Fig. 2:

- Knotenelement: 1 1'
- Hohlprofile: 2 2'
- Tragestruktur: 3
- Verbindungsbereich: 4
- Aufnahme: 5 5'
- Endbereich: 6
- Schweiß-Klebeverb.: 7
- Fläche: 8
- Ausgleichsraum: 9
- Begrenzungswand: 10
- innere Hohlräume: 11
- Zu- und Abläufe: 12
- Ausbuchtung: 13
- Bodenbereich: 14

## Patentansprüche

1. Wagenkasten für Kraftfahrzeuge, insbesondere Personenkraftwagen, mit einer aus Hohlprofilen (2, 2') zusammengesetzten Trägerstruktur, die in einem gemeinsamen Verbindungsbereich von zumindest zwei Hohlprofilen separate Knotenelemente (1, 1') aufweist, an denen die Hohlprofile (2, 2') befestigt sind, **dadurch gekennzeichnet**, daß die Knotenelemente (1, 1') integrierte Zu- und Abläufe (12) für die inneren Hohlräume (11) der angeschlossenen Hohlprofile (2, 2') aufweisen, wobei jeder Zu- und Ablauf (12) durch eine örtliche, rinnenförmige Ausbuchtung (13) in einer Aufnahme (5, 5') des Knotenelements (1, 1') gebildet ist.

2. Wagenkasten nach Anspruch 1, **dadurch gekennzeichnet**, daß die Ausbuchtung (13) an einer stirnseitigen Begrenzungswand (10) der Aufnahme (5, 5') vorgesehen ist.

3. Wagenkasten nach den Ansprüchen 1 und 2, **dadurch gekennzeichnet**, daß die offene Seite der Ausbuchtung (13) dem Endbereich (6) des in die Aufnahme (5, 5') eingesetzten Hohlprofils (2, 2') zugekehrt ist.

4. Wagenkasten nach den Ansprüchen 1 bis 3, **dadurch gekennzeichnet**, daß die Ausbuchtung (13) entlang der Höhenerstreckung des Hohlprofils (2, 2') eines Knotenelements (1, 1') verläuft und daß zumindest ein Endbereich der Ausbuchtung (13) offen ausgebildet ist.

5. Wagenkasten nach den Ansprüchen 1 bis 4, **dadurch gekennzeichnet**, daß die Ausbuchtungen (13) in der Draufsicht gesehen U-förmig oder halbkreisförmig ausgebildet sind.

6. Wagenkasten nach einem oder mehreren der vorangegangenen Ansprüche, **dadurch gekennzeichnet**, daß in Längsrichtung der Aufnahme (5, 5') benachbart des Zu- und Ablaufs (12) ein Ausgleichsraum (S) zur Kompensation von Toleranzen des Hohlprofils (2, 2') vorgesehen ist.

7. Wagenkasten nach einem oder mehreren der vorangegangenen Ansprüche, **dadurch gekennzeichnet**, daß die Knotenelemente (1, 1') durch Gießen oder Innenhochdruck-Umformen hergestellt sind.

8. Wagenkasten nach einem oder mehreren der vorangegangenen Ansprüche, **dadurch gekennzeichnet**, daß die Hohlprofile (2, 2') durch Strangpreßprofile gebildet werden.

## Claims

1. A frame for motor vehicles, in particular passenger cars, with a support structure assembled from hollow sections (2, 2') and provided - in a common connexion area of at least two hollow sections - with separate junction members (1, 1') to which the hollow sections (2, 2') are secured, **characterized in that** the junction members (1, 1') have integrated inlets and outlets (12) for the internal cavities (11) of the attached hollow sections (2, 2'), wherein each inlet and outlet (12) is formed by a local channel-shaped bulge (13) in a receptacle (5, 5') of the junction member (1, 1').

2. A vehicle frame according to Claim 1, **characterized in that** the bulge (13) is provided on a boundary wall (10) on the end face of the receptacle (5, 5').

3. A vehicle frame according to Claims 1 and 2, **characterized in that** the open side of the bulge (13) faces the end region (6) of the hollow section (2, 2') inserted in the receptacle (5, 5').

4. A vehicle frame according to Claims 1 to 3, **characterized in that** that the bulge (13) extends along the vertical extension of the hollow section (2, 2') of a junction member (1, 1'), and at least one end region of the bulge (13) is open.

5. A vehicle frame according to Claims 1 to 4, **characterized in that** as seen in plan view the bulges (13) are U-shaped, semicircular or the like.

6. A vehicle frame according to one or more of the preceding Claims, **characterized in that** a compensation space (S) for compensating tolerances of the hollow section (2, 2') is provided in the longitudinal direction of the receptacle (5, 5') adjacent to the inlet and outlet (12).

7. A vehicle frame according to one or more of the preceding Claims, **characterized in that** the junction members (1, 1') are produced by casting or internal high-pressure shaping.

8. A vehicle frame according to one or more of the preceding Claims, **characterized in that** the hollow sections (2, 2') are formed by extruded sections.

## Revendications

1. Caisse de véhicule automobile, en particulier de voiture de tourisme, avec une structure portante constituée de profilés creux (2, 2'), qui présente, dans une zone d'assemblage commune d'au moins deux profilés creux, des éléments de noeud (1, 1') séparés, sur lesquels sont fixés les profilés creux (2, 2'), caractérisée en ce que les éléments de noeud (1, 1') présentent des arrivées et des départs (12) intégrés pour les cavités intérieures (11) des profilés creux (2, 2') rattachés, chaque départ et arrivée (12) étant formé par un creux (13) local, en forme de rigole, dans un logement (5, 5') de l'élément de noeud (1, 1').

2. Caisse selon la revendication 1, caractérisée en ce que le creux (13) est prévu sur une paroi de délimitation (10) frontale du logement (5, 5').

3. Caisse selon les revendications 1 et 2, caractérisée en ce que la côte ouvert du creux (13) est tourné vers la zone d'extrémité (6) du profilé creux (2, 2'), inséré dans le logement (5, 5').

4. Caisse selon les revendications 1 à 3, caractérisée en ce que le creux (13) s'étend le long de l'extension en hauteur du profilé (2, 2') d'un élément de noeud (1, 1') et en ce qu'au moins une zone d'extrémité du creux (13) est ouverte.

5. Caisse selon les revendications 1 à 4, caractérisée en ce que les creux (13), vus de dessus, sont en forme de U, semi-circulaires ou similaires.

6. Caisse selon une ou plusieurs des revendications précédentes, caractérisée en ce que dans la direction longitudinale du logement (5, 5'), à proximité du départ et de l'arrivée (12), il est prévu un volume de compensation (S) pour la compensation de tolérances du profilé creux (2, 2').

7. Caisse selon une ou plusieurs des revendications précédentes, caractérisée en ce que les éléments de noeud (1 1') sont fabriqués par coulée ou formage sous haute pression intérieure.

8. Caisse selon une ou plusieurs des revendications précédentes, caractérisée en ce que les profilés creux (2, 2') sont des profilés extrudés.
